# EUROPÄISCHE PATENTANMELDUNG

(11) **EP 0 622 886 A1**
(43) Veröffentlichungstag der Anmeldung: **02.11.1994**
(21) Anmeldenummer: 94105971.9
(22) Anmeldetag: 18.04.1994
(51) Int. Cl.: H02K 5/167, H02K 15/16

(54) **Motor, insbesondere Elektromotor, mit einstellbarem Axialspiel zwischen dem Rotor und dem Stator**

(30) Priorität: 30.04.1993 EP 93107099; 16.03.1994 DE 9404465 U
(71) Anmelder: SIEMENS AKTIENGESELLSCHAFT, D-80333 München (DE)
(72) Erfinder: Adam, Peter, Dipl.-Ing. (FH), D-97204 Höchberg (DE); Schilling, Werner, D-97078 Würzburg (DE)

(57) **Zusammenfassung**

Das Axialspiel wird mittels einer Distanzhülse (4) eingestellt, die an einem Kragen (3.1) einer Isolierendscheibe (3) vormagaziniert gehalten ist; zur Einstellung eines individuellen Axialspiels wird die Distanzhülse (4) aus ihrer Vormagazinierstellung mittels einer Schraub-Gewindeführung (3.14) relativ zu dem Kragen (3.1) axial verstellt und in ihrer Endstellung durch eine Rastarretierung bzw. durch Selbsthemmung fixiert.

## Beschreibung

Die Erfindung bezieht sich auf einen Motor, insbesondere Elektromotor, mit Axialspiel zwischen dem Rotor und dem Stator gemäß Anspruch 1.

Durch die DE-A1-29 46 880 ist eine Anordnung zum Dämpfen der Axialschwingungen von in Gleitlagern gestutzten Motoren bekannt, bei der auf der Rotorwelle des Motors zwischen dem Rotor und den Lagerkörpern Buchsen frei verschieblich und am Rotor elastisch federnd abgestützt vorgesehen sind; zum Zwecke eines Ausgleichs besonders großer Toleranzen zwischen dem Rotor und den Gleitlagern ist mit diesen Buchsen ein axial vorstehender Ringkörper verrastbar.

Bei einem durch die EP-B1-0 213 427 bekannten Elektromotor wird das Axialspiel mittels einer Verschiebehülse eingestellt, die in einer Wellenbohrung im Kragen einer Isolierendscheibe im Preßsitz vormagaziniert gehalten ist und zur Einstellung des gewünschten Axialspiels je nach den im Einzelfall gegebenen Toleranzverhältnissen des zusammengebauten Motors mehr oder weniger, ausgehend von der vormagazinierten Stellung, weiter in den aufnehmenden Kragen hineingeschoben wird. Um bei der im bekannten Fall vorgesehenen allein kraftschlüssigen Fixierung eine sichere Lagefixierung der Distanzhülse in ihrer Einstell-Endlage relativ zu der Isolierendscheibe, insbesondere zu deren Kragen, gewährleisten zu können, ist ein relativ hoher Preßdruck notwendig, der das axiale Verschieben der Distanzhülse beim Einstellvorgang, insbesondere bei Überwindung der Ruhereibung, behindert; daher wird im bekannten Fall vor dem Axialverschieben der Distanzhülse die Gleitfläche zwischen der Distanzhülse und dem umgebenden Kragen der Isolierendscheibe mit einer Gleitflüssigkeit benetzt, die vorteilhafterweise aus einen diffusionsklebenden Lösungsmittel besteht, derart daß die Distanzhülse nach dem Einstellen zur Lagefixierung im umgebenden Kragen der Isolierendscheibe zusätzlich verklebt wird.

Aufgabe der vorliegenden Erfindung ist es, trotz einfacher Herstellung und Montage eine, insbesondere auch bei rauhem Betriebseinsatz, sichere Lagefixierung der Distanzhülse in ihrer Einstell-Endlage gewährleisten zu können.

Die Lösung dieser Aufgabe gelingt bei einem Motor der eingangs genannten Art durch die Lehre des Patentanspruchs 1; vorteilhafte Ausgestaltungen der Erfindung sind jeweils Gegenstand der Unteransprüche.

Die Erfindung erlaubt bei vorteilhaft nur geringer Pressung, insbesondere für eine vormagazinierte Halterung zwischen der Isolierendscheibe einerseits und der Distanzhülse andererseits, eine einfache Einstellung des Axialspiels durch schraubenartiges Verstellen der Distanzhülse relativ zu ihrer Aufnahme in dem Motorteil bei gleichzeitig gewährleisteter Fixierung der Einstell-Endstellung. Eine Fixierung der Einstell-Endstellung kann allein durch eine selbsthemmende Auslegung des schraubenartigen Einstellgewindes (Steigungswinkel kleiner als 4°) und/oder insbesondere bei rauhem Betriebseinsatz bzw. unabhängig von der Einhaltung eines bestimmten Steigungswinkel-Bereichs durch eine formschlüssige Raster-Eisntellsicherung, insbesondere in Form einer Außen-Rasterung an der Distanzhülse und eine korrespondierende Innenrasterung an einem Kragen einer stirnseitig am Rotorblechpaket des Motors anliegenden Isolierendscheibe, erreicht werden, wobei die Distanzhülse einerseits und die Isolierendscheibe andererseits sich zumindest bereichsweise axial überdecken.

Nach einer Ausgestaltung der Erfindung sind am Außenumfang der Distanzhülse im tangentialen Abstand Zahn-Rasterbereiche mit axialer Folge von im wesentlichen tangential verlaufenden Zähnen angeordnet und am Innenrand des Kragens der Isolierendscheibe im gegenseitigen tangentialen Abstand korrespondierende, zwischen die Zähne federnd einschnappende Rastnasen vorgesehen, wobei zweckmäßigerweise eine derartige Formgebung der im wesentlichen tangential verlaufenden Zahne und/oder der Rastnasen gewählt ist, daß diese bei einer axialen Bewegung der Distanzhülse in Richtung auf das Rotorblechpaket kraftschlüssig sperrend in die Zahn-Rasterung eingreifen, jedoch bei einer Bewegung der Distanzhülse in Gegenrichtung bei ihrer Einstellung in die Einstell-Endlage über die Zahn-Rasterung sperrungsfrei hinweggleiten können. Die Zahn-Rasterbereiche sind über den Umfang im Sinne einer schraubenartigen Gewinde-Einstellung versetzt; darüberhinaus ist nach einer weiteren Ausgestaltung vorgesehen, jeweils jeden Zahn eines Rasterbereichs mit einer Gewindesteigung im Sinne einer zusätzlichen Feineinstellung zu versehen.

Nach einer alternativen Ausgestaltung der Erfindung ist ein axiales Anliegen der Distanzhülse an dem Kragen der Isolierendscheibe über einen in tangentialer Richtung mit einer Steigung versehenen Anschlag und eine tangentiale Rückdrehsicherung der Distanzhülse aus ihrer Einstell-Anschlaglage durch axiales Eintauchen einer auf ihrem Umfang angeordneten Außenrasterung mit im wesentlichen axial verlaufenden Zähnen in eine korrespondierende Innenrasterung an dem Kragen der Isolierendscheibe vorgesehen.

Sämtliche vorgenannt beschriebenen Fixierungssicherungen für die Einstell-Endstellung der Distanzhülse sind, insbesondere bei vorteilhaft aus Kunststoff gespritzter Isolierendscheibe bzw. Distanzhülse, mit einfachen, jeweils nur radial bzw. axial gerichteten bzw. nach außen ziehbaren Formmitteln herstellbar.
Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: einen axialen Längsschnitt durch einen dauermagneterregten Kommutator-Kleinmotor.
- FIG 2: ein erstes Ausführungsbeispiel in vergrößertem Detailausschnitt aus FIG 1 im Bereich des Kragens der rechten Isolierendscheibe mit darin fixierter Distanzhülse.
- FIG 3: ein radiales Schnittbild der Anordnung in FIG 2 gemäß Schnittverlaut III-III.
- FIG 4: eine radiale Draufsicht auf die Anordnung gemäß FIG 3 mit zusätzlicher Feineinstellung zur Rückdrehsicherung durch Feinrasterung der Zahnflanken.
- FIG 5: ein zweites Ausführungsbeispiel mit einstellbarer axialer Anlage der Distanzhülse an einem Kragen einer Isolierendscheibe bei entkoppelter Stellung.
- FIG 6: die Anordnung nach FIG 5 in Einstell-Endstellung bei gegenseitiger Rasterkopplung.
- FIG 7: die Anordnung gemäß Fig 6 im Schnittverlauf VII-VII.
- FIG 8: ein drittes Ausführungsbeispiel mit konstruktiv getrennter Einstell-Gewindeführung bzw. Raster-Fixierung.
- FIG 9: die Anordnung gemäß FIG 8 im Schnittverlauf VIII-VIII.

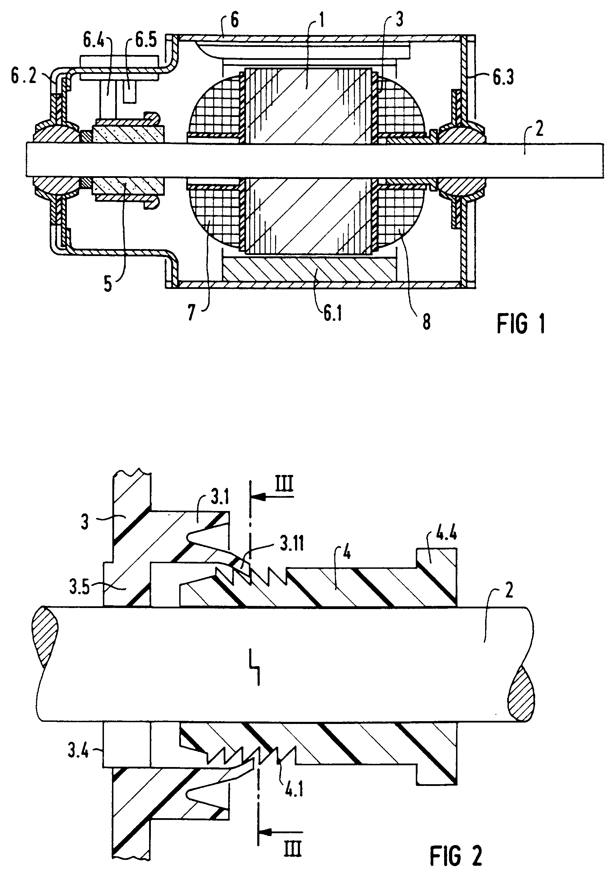

FIG 1 zeigt einen dauermagneterregten Kommutatormotor. An der Innenumfangsfläche des Statorgehäuses 6 sind das Magnetfeld erzeugende Dauermagnete 6.1 angeordnet. Stirnseitig sind am Statorgehäuse 6 Lagerbügel 6.2;6.3 befestigt. Die Lagerbügel 6.2;6.3 nehmen Kalottenlager auf, in denen eine Rotorwelle 2 drehbar gelagert ist. Auf der Rotorwelle 2 ist ein Rotorblechpaket 1, z.B. im Preßsitz, gehalten. Auf dem linken Wellenende der Rotorwelle 2 ist innerhalb des Statorgehäuses 6 ein Kommutator 5 aufgeklebt. Bürstenhalter 6.4;6.5 sind in hier nicht näher dargestellter Weise in einer statorgehäusefesten Bürstenbrücke gelagert und mit einer äußeren Anschlußleitung verbunden. An die Lamellen des Kommutators 5 sind die Wicklungsenden der gewickelten Rotorwicklung angeschlossen, von der in FIG 1 die stirnseitigen Wickelköpfe 7;8 dargestellt sind.

Zur elektrischen Isolierung der Wickelköpfe gegenüber den Stirnseiten bzw. den stirnseitigen Nuträumen des Rotorblechpaketes 1 und gegenüber der Rotorwelle 2 sind Kunststoff-Isolierendscheiben 3 mit je einem axial angeformten und zumindest im Bereich der Wickelköpfe 7;8 die Rotorwelle 2 übergreifenden Kragen 3.1 vorgesehen. Die rechte Isolierendscheibe 3 wird darüberhinaus nicht nur zur Isolierung der Wicklung gegenüber dem Rotorblechpaket 1 und der Rotorwelle 2 sondern, wie im einzelnen in der erfindungsgemäßen Ausführung aus den Figuren 2 bis 9 ersichtlich, zur Axialspieleinstellung mittels einer Distanzhülse 4 mitbenutzt. Lediglich zur Typenvereinheitlichung ist vorteilhafterweise an der linken Seite des Rotorblechpaketes 1 der gleiche Typ einer Isolierendscheibe benutzt, obwohl hier in den dargestellten Beispielen eine Verschiebehülse nicht vorgesehen ist.

Der axial an die Isolierendscheibe 3 angeformte eine Kragen 3.1 weist eine zur Rotorwelle 2 konzentrische innere Wellenbohrung auf, in die die Distanzhülse 4, insbesondere zur vormagazinierbaren Halterung, in leichtem Preßsitz eingesteckt ist. Durch diese Vorfügung kann die Isolierendscheibe 3 mit der vormagazinierten Distanzhülse 4 als vormontiertes Bauteil angeliefert werden, das dann, insbesondere in für eine Automatenfertigung vorteilhafter Weise, mit nur einem einzigen Handhabungsschritt auf die Rotorwelle 2 bis zum Anliegen gegen die Stirnseite des Rotorblechpaketes 1 zugeführt werden kann. Die Distanzhülse 4 taucht in ihrer vormagazinierten Stellung derart tief in den Kragen 3.1 der Isolierendscheibe 3 ein, daß sie zur Einstellung des jeweiligen individuellen Axialspiels bis zu ihrer Einstell-Endlage wieder aus dem Kragen 3.1 herausgezogen werden kann, jedoch mit diesem noch in formschlüssiger Lagefixierungs-Verbindung verbleibt.

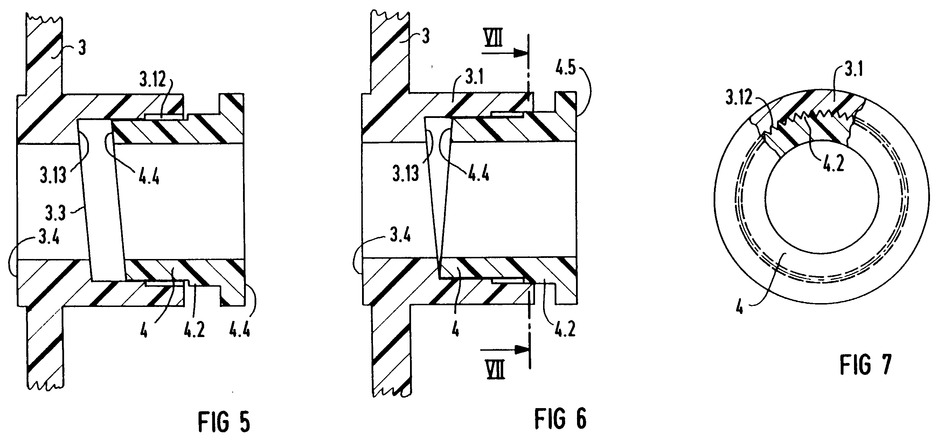

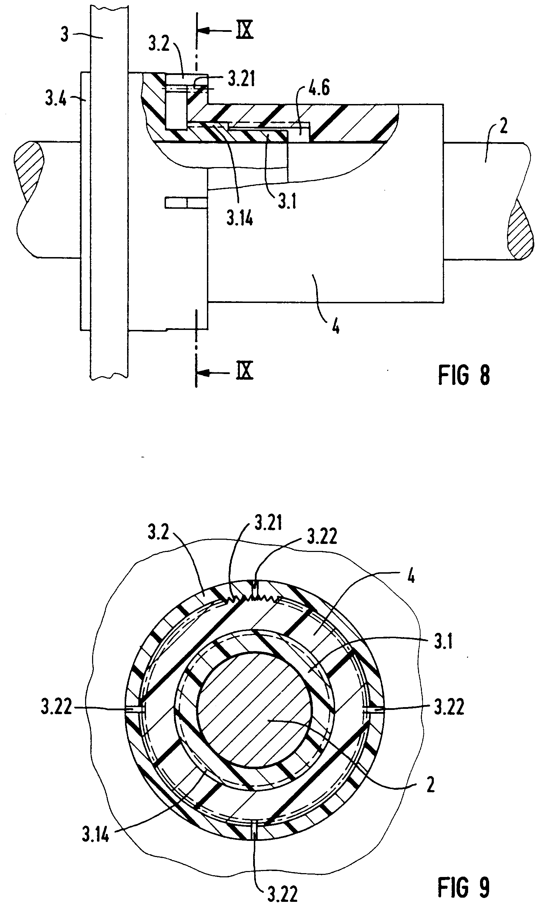

FIG 2-4 zeigen ein erstes, FIG 5-7 ein zweites, FIG 8,9 ein drittes erfindungsgemäßes Ausführungsbeispiel einer Fixierung der Distanzhülse 4 in ihrer Einstell-Endlage relativ zu der Isolierendscheibe 3.

Gemäß FIG 2-4 sind auf dem Außenumfang der Distanzhülse 4 in tangentialem Abstand zwei einander gegenüberliegende Zahn-Rasterbereiche mit einer axialen Folge von in Umfangsrichtung verlaufenden Zähnen 4.1 und am Innenrand des Kragens 3.1 einander gegenüberliegende korrespondierende, zwischen die Zähne 4.1 federnd einschnappende Rastnasen 3.11 angeordnet. Wie insbes. aus FIG 2 ersichtlich, ist in vorteilhafter Weise eine derartige Formgebung der im wesentlichen tangential verlaufenden Zähne 4.1 und/oder der Rastnasen 3.11 vorgesehen, daß diese bei einer axialen Bewegung der Distanzhülse 4 in Richtung auf das Rotorblechpaket 1 formschlüssig sperrend zwischen die Zähne 4.1 eingreifen, jedoch bei einer Bewegung der Distanzhülse 4 in Gegenrichtung über die Zähne 4.1 sperrungsfrei hinweggleiten. Beim erstmaligen Einstecken der Distanzhülse 4 in die Wellenbohrung des Kragens 3.1 können die Rastnasen 3.11 durch eine Montagegabel radial angehoben werden, die vom linken Ende axial in die Freiräume zwischen stirnseitigen Speichen 3.5 der Isolierendscheibe 3 axial einschiebbar ist, mit denen sich die Isolierendscheibe 3 auf der Rotorwelle 2 abstützt. Zur Einstellung des Axialspiels wird dann nach der Feststellung der jeweils im Einzelfall gegebenen Toleranzen die Distanzhülse 4 soeit aus dem Kragen 3.1 herausgezogen, bis in einer dann gegebenen formschlüssigen Raststellung das gewünschte Axialspiel gewährleistet und formschlüssig fixiert ist.

Dabei ist - wie gemäß FIG 2 aus einem Vergleich der axialen Lage der Zähne des oberen Rasterbereiches gegenüber dem unteren Rasterbereich ersichtlich - im Sinne einer schraubenartigen Gewindeeinstellung eine axiale Verschiebung der Zähne um etwa eine halbe Zahnteilung derart vorgesehen, daß eine Zwischenfeineinstellung des Axialspiels im Vergleich zu der kleinsten axialen Zahnteilung eines Zahnradrasterbereichs möglich ist; in dem in FIG 2 dargestellten Fall ist die formschlüssige Fixierung der Einstell-Endlage durch den oberen Zahnbereich bzw. die obere Rastnase 3.11 gegeben.

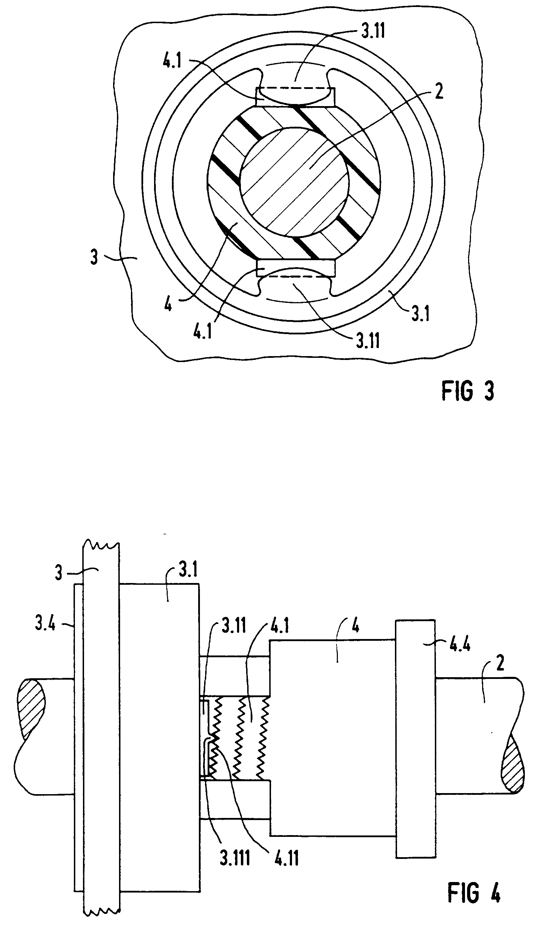

Eine noch größere Feineinstellung kann durch eine kontinuierliche Steigung der im wesentlichen ansonsten tangential verlaufenden Zähne selbst in Umfangsrichtung erreicht werden, wobei zweckmäßigerweise die Steigung im Sinne einer eine Rückdrehung der Distanzhülse hindernden Selbsthemmung gewählt ist. Eine noch weitere Sicherung gegen eine Rückdrehung kann - wie aus FIG 4 ersichtlich - mittels einer stirnseitigen Rasterung 4.11 der Flanken der Zähne 4.1 erreicht werden, in welche die Rastnasen 3.11 mit einer Fein-Rastnase 3.111 einschnappen.

FIG 5-7 zeigen ein weiteres erfindungsgemäßes Ausführungsbeispiel mit einem Anliegen der Distanzhülse 4 an dem Kragen 3.1 der Isolierscheibe 3 über zumindest einen in tangentialer Richtung mit einer Steigung versehenen Anschlag 3.13 bzw. 4.4 an dem Kragen 3.1 bzw. an der Distanzhülse 4 und eine tangentiale Rückstellsicherung der Distanzhülse 4 aus ihrer Einstell-Anschlagendlage durch axiales Eintauchen einer auf ihrem Umfange angeordenten Außenrasterung mit im wesentlichen axial verlaufenden Zähnen 4.2 in eine korrespondierende axial verlaufende Innenrasterung mit axial verlaufenden Zähnen 3.12 an dem Kragen 3.1 der Isolierscheibe 3. Zur Einstellung der Anschlagendlage wird gemäß FIG 5 die Distanzhülse 4 soweit aus dem Kragen 3.1 herausgezogen, daß die Zahn-Rasterung zwischen den axial verlaufenden Zähnen 4.2 an der Distanzhülse 4 und den korrespondierenden Zähnen 3.12 an dem Kragen 3.1 entkoppelt ist; durch Drehen der Distanzhülse 4 kann dann ein axialer Anschlag der tangential steigenden Anschlagflächen im Sinne des gewünschten Axialspiel eingestellt werden. FIG 6 zeigt die Einstell-Anschlagendlage zwischen der Distanzhülse 4 und dem Kragen 3.1, nachdem die Distanzhülse 4 um einen Einstellwinkel von 180° gegenüber ihrer ursprünglichen Vormagazinierstellung gemäß FIG 5 gedreht worden ist.

FIG 8,9 zeigen ein weiteres Ausführungsbeispiel, bei dem eine eindeutige konstruktive bzw. funktionelle Trennung zwischen einer schraubenartigen Axialspieleinstellung einerseits und einer Raster-Einstellsicherung andererseits vorgesehen ist.

Dazu ist zunächst eine schraubenartige Gewindeführung 3.14 zwischen dem Innenumfang einer rotorwellenseitigen Bohrung 4.3 der Distanzhülse 4 einerseits und dem Außenumfang eines in die Bohrung 4.3 eintauchenden Kragens 3.1 der Isolierendscheibe 3 andererseits vorgesehen. Die Gewindeführung erstreckt sich zweckmäßigerweise über den gesamten Umfang beider Bauteile; selbstverständlich kann wie bei den vorhergehenden Ausführungsbeispielen auch wiederum die Isolierendscheibe 3 die Distanzhülse 4 übergreifend anstelle eintauchend ausgebildet sein.

Soll im Rahmen vorliegender Erfindung auf eine zusätzliche Rastsicherung der Einstellendlage verzichtet werden, so wird die Gewindeführung 3.14 mit einer selbsthemmenden Gewindesteigung ausgebildet; eine weitgehende Unabhängigkeit von der Einhaltung einer bestimmten Gewindesteigung ist gegeben, wenn eine zusätzliche Rasterung 3.21 vorgesehen wird, die gemäß einem erfindungsgemäßen Ausführungsbeispiel zweckmäßigerweise zwischen einem weiteren, radial äußeren Kragen 3.2 der Isolierendscheibe 3 und einem untergreifenden Außenumfang der Distanzhülse 4 ausgebildet ist.

Um beim Dreheinstellen der Distanzhülse 4 die Rasthemmung überwinden zu können, ist da weitere Kragen 3.2 über seinen Umfang verteilt durch stirnseitige Axialschlitze 3.22 radial elastisch aufweitbar.

Um das eingestellte Axialspiel auch unter stärkerem betriebsmäßigen Axialdruck einhalten zu können, weist die Isolierendscheibe 3 an ihren dem Rotorpaket 1 zugewandten Ende einen Anlagebund 3.4 derart auf, daß die axialen Kräfte nur über diesen formstabilen Anlagebund 3.4 und nicht über die weiteren, gegebenenfalls elastisch nachgebenden Flächen der Isolierendscheibe 3 auf das Rotorblechpaket 1 Übertragen werden. In ähnlicher Weise ist an dem dem Rotorblechpaket 1 abgewandten Ende ein lagerseitiger Anlagebund 4.5 vorgesehen.

Wie auch aus den Zeichnungsdarstellungen ersichtlich, sind sämtliche Einstell- bzw. Fixierungsmittel der vorzugsweise aus Kunststoff gespritzten Bauteile der Isolierendscheibe mit ihrem Kragen sowie der Distanzhülse mit einfachen nur radial bzw. axial nach außen ziehbaren Formungsmitteln spritzbar.

## Patentansprüche

1. Motor, insbesondere Elektromotor, mit einstellbarem Axialspiel zwischen dem Rotor und dem Stator mit folgenden Merkmalen:
a) Auf der Rotorwelle (2) ist eine Distanzhülse (4) axial verschieblich angeordnet;
b) die Distanzhülse (4) ist in ihrer Einstell-Endstellung relativ zu einem Motorbauteil, insbesondere einer stirnseitig am Rotorblechpaket (1) anliegenden Isolierendscheibe (3), fixierbar;
c) die Distanzhülse (4) ist zur Einstellung in ihre Einstell-Endstellung schraubenartig geführt relativ zu einem Motorbauteil, insbesondere relativ zu einem axialen Kragen (3.1) der Isolierendscheibe (3).

2. Motor nach Anspruch 1, **gekennzeichnet durch** eine schraubenartige Gewindeführung zwischen der Distanzhülse (4) einerseits und dem Kragen (3.1) der Isolierendscheibe (3) andererseits mit einer Gewindesteigung im Sinne einer eine Rückstellung der Distanzhülse (4) hindernden Selbsthemmung.

3. Motor nach Anspruch 1 und/oder 2, **gekennzeichnet durch** eine schraubenartige Gewindeführung zwischen der Distanzhülse (4) und dem Kragen (3.1) der Isolierendscheibe (3) sowie durch eine Rast-Rückstellsicherung zwischen der Distanzhülse (4) und der Isolierendscheibe (3), insbesondere einem weiteren Kragen (3.2) der Isolierendscheibe (3).

4. Motor nach Anspruch 3, **gekennzeichnet durch** eine schraubenartige Gewindeführung (3.14) zwischen dem Innenumfang einer rotorwellenseitigen Bohrung (4.6) der Distanzhülse (4) einerseits und dem Außenumfang eines in der Bohrung (4.3) eintauchenden Kragens (3.1) der Isolierendscheibe (3) andererseits sowie eine im wesentlichen in Umfangsrichtung verlaufende Rasterung (3.21) zwischen dem Außenumfang der Distanzhülse (4) und dem weiteren Kragen (3.2).

5. Motor nach Anspruch 4, **gekennzeichnet durch** einen in Umfangsrichtung im Sinne einer elastischen radialen Aufweitung ausgebildeten, insbesondere mit stirnseitigen Axialschlitzen (3.22) versehenen weiteren Kragen (3.2).

6. Motor nach Anspruch 5, **gekennzeichnet durch** am Außenumfang der Distanzhülse (4) in tangentialem Abstand angeordnete, im Sinne einer schraubenartigen Gewindeführung über den Umfang der Distanzhülse (4) axial gegeneinander versetzte Zahn-Rasterbereiche mit axialer Folge von in Umfangsrichtung verlaufenden Zähnen (4.1) und durch am Innenumfang des einen Kragens (3.1) in tangentialem Abstand angeordnete korrespondierende, zwischen die Zähne (4.1) federnd einschnappende Rastnasen (3.11). (FIG 1-4)

7. Motor nach Anspruch 6, **gekennzeichnet durch** eine derartige Formgebung der tangential verlaufenden Zähne (4.1) der Zahn-Rasterbereiche und/oder der Rastnasen (3.11), daß diese bei einer axialen Bewegung der Distanzhülse (4) in Richtung auf das Rotorblechpaket (1) formschlüssig sperrend zwischen die Zähne (4.1) eingreifen, jedoch bei einer Bewegung der Distanzhülse (4) in Gegenrichtung über die Zähne (4.1) sperrungsfrei gleiten.

8. Motor nach einem der Ansprüche 6 bzw. 7, **gekennzeichnet durch** eine kontinuierliche Steigung der Zähne (4.1) der Zahn-Rasterbereiche in Umfangsrichtung im Sinne einer kontinuierlichen axialen Feineinstellung und/oder einer eine Rückstellung der Distanzhülse (4) hindernden Selbsthemmung.

9. Motor nach Anspruch 6, **gekennzeichnet durch** eine stirnseitige Rasterung (4.11) der Flanken der Zähne (4.1), in welche die Rastnasen (3.11) mit einer Fein-Rastnase (3.111) im Sinne einer axialen Feineinstellung und/oder einer eine Rückstellung der Distanzhülse (4) hindernden formschlüssigen Hemmung. (FIG 4)

10. Motor nach Anspruch 1, **gekennzeichnet durch** einen in tangentialer Richtung mit einer Steigung versehenen Anschlag (3.13 bzw. 4.5) zwischen der Distanzhülse (4) und der Isolierendscheibe (3) und durch eine tangentiale Rückstellsicherung der Distanzhülse (4) durch axiales Eintauchen einer auf dem Umfange der Distanzhülsen (4) angeordneten Außenrasterung mit im wesentlichen axial verlaufenden Zähnen (4.2) in eine korrespondierende Innerasterung mit axial verlaufenden Zähnen (3.12) an der Isolierendscheibe (3), insbesondere an deren einem Kragen (3.1). (FIG 5-7)
